# EUROPÄISCHE PATENTSCHRIFT

(11) **EP 0 962 119 B1**
(45) Veröffentlichungstag und Bekanntmachung des Hinweises auf die Patenterteilung: **12.07.2006**
(21) Anmeldenummer: 98912202.3
(22) Anmeldetag: 09.02.1998
(51) Int. Cl.: H04Q 11/04

(54) **ATM-KOMMUNIKATIONSSYSTEM ZUM VERMITTELN VON INTERNET-DATENPAKETEN**
ATM COMMUNICATIONS SYSTEM FOR TRANSMITTING INTERNET DATA PACKETS
SYSTEME DE COMMUNICATION MTA POUR PERMETTRE L'ECHANGE DE PAQUETS DE DONNEES DE L'INTERNET

(30) Priorität: 21.02.1997 DE 19707061
(43) Veröffentlichungstag der Anmeldung: 08.12.1999
(73) Patentinhaber: SIEMENS AKTIENGESELLSCHAFT, 80333 München (DE)
(72) Erfinder: SCHRODI, Karl, D-82538 Geretsried (DE); FISCHER, Wolfgang, D-82110 Germering (DE); GÖLDNER, Ernst-Heinrich, D-81545 München (DE)
(86) Internationale Anmeldenummer: PCT/DE1998/000363
(87) Internationale Veröffentlichungsnummer: WO 1998/037725

(56) Entgegenhaltungen:
- EP-A- 0 597 487
- NEWMAN P ET AL: "FLOW LABELLED IPD A CONNECTIONLESS APPROACH TO ATM" PROCEEDINGS OF IEEE INFOCOM 1996. CONFERENCE ON COMPUTER COMMUNICATIONS, FIFTEENTH ANNUAL JOINT CONFERENCE OF THE IEEE COMPUTER AND COMMUNICATIONS SOCIETIES. NETWORKING THE NEXT GENERATION SAN FRANCISCO, MAR. 24 - 28, 1996, Bd. VOL. 3, Nr. CONF. 15, 24.März 1996, INSTITUTE OF ELECTRICAL AND ELECTRONICS ENGINEERS, Seiten 1251-1260, XP000622261
- DEBANJAN SAHA ET AL: "A DESIGN FOR IMPLEMENTATION OF THE INTERNET PROTOCOL IN A LOCAL ATMNETWORK" SERVING HUMANITY THROUGH COMMUNICATIONS. SUPERCOM/ICC, NEW ORLEANS, MAY 1 - 5, 1994, Bd. VOL. 3, Nr. -, 1.Mai 1994, INSTITUTE OF ELECTRICAL AND ELECTRONICS ENGINEERS, Seiten 1326-1330, XP000438713
- PARULKAR G ET AL: "AITPM: A STRATEGY FOR INTEGRATING IP WITH ATM" COMPUTER COMMUNICATIONS REVIEW, Bd. 25, Nr. 4, 1.Oktober 1995, Seiten 49-58, XP000541650

## Beschreibung

Mit zunehmender Bedeutung von Internet bzw. 'World Wide Web' beeinflußt das Internet-Protokoll in steigendem Maße die Ausgestaltung von bestehenden und zukünftigen Kommunikationsnetzen. Das derzeit verwendete und standardisierte Internet-Protokoll - insbesondere Internet-Protokoll Version 4 - ist paketweise orientiert, d.h. die zu übermittelnden Informationen werden in Datenpakete verpackt. Diesen Internet-Datenpaketen ist jeweils ein Internet-Datenpaket-Kopf vorangestellt, in dem eine 32 Byte umfassende Ursprungs- und Zieladresse - Source and Destination Address - angegeben ist. Für eine geplante zukünftige Variante sind für die Ursprungs- bzw. Zieladresse jeweils 128 Byte vorgesehen. Mit Hilfe des derzeitigen oder eines zukünftigen Internet-Protokolls werden Kommunikationsbeziehung zwischen Internet-Kommunikationsendgeräten, d.h. insbesondere Computern hergestellt, wobei die Kommunikationsendgeräte direkt über 'Point to Point'- Datenverbindungen miteinander verbunden sind.

Aufgrund der erheblichen Wachstumsraten von Internet sind hierfür zusätzliche Infrastrukturen zu schaffen bzw. die Kommunikationsnetze anzupassen oder zu ergänzen. Eine mögliche Anpassung stellen Internet-Vermittlungseinrichtungen - in der Fachwelt als Router oder Gateway bekannt und im weiteren als Router bezeichnet -, die im Randbereich von Kommunikationsnetzen als Zugangs-Router bzw. Gateway (Edge Router) und im Kommunikationsnetz selbst als spezielle Internet-Router eingesetzt werden. Seit geraumer Zeit sind Kommunikationsnetzkonzeptionen für die Vermittlung von Internet-Datenpaketen in Diskussion, bei denen die Router in ATM-Technologie (Asynchron Transfer Modus) realisiert werden. Hierbei werden in den Zugangs-Routern oder auch in dem dem Zugangs-Router zugeordneten Zugangs-Netzwerk die Internet-Datenpakete in ATM-Zellen verpackt und über das ATM-Kommunikationsnetz an spezielle Internet-ATM-Router übermittelt. Diese Internet-ATM-Router sind an bestimmte ATM-Kommunikationssysteme des ATM-Kommunikationsnetzes wie ein Server angeschlossen und realisieren ein dem ATM-Kommunikationsnetz überlagertes virtuelles Internet-Overlay-Netz, wobei die Internet-ATM-Router im wesentlichen über permanente virtuelle Verbindungen (PVC) und semipermanente virtuelle Verbindungen (SPVC) verbunden sind.

Diese Konzeption mit zusätzlichen 'Edge'-Routern und speziellen ATM-Routern in ATM-Kommunikationsnetzen bedeutet bei zunehmender Akzeptanz und Verbreitung von Internet aufgrund der zusätzlichen Routingfunktionen in den ATM-Kommunikationssystemen zu und von den Internet-ATM-Routern eine erhebliche zusätzliche Verkehrsbelastung der ATM-Kommunikationssysteme des ATM-Kommunikationsnetzes, die zu einer Verminderung der Vermittlungsleistung für die Daten bzw. Datenpakete für weitere Dienste führt.

Aus der EP 0 597 487 A2 ist ein Kommunikationssystem bekannt, bei dem in ATM-verpackte Daten und in ATM-Zellen verpackte Datenpakete über einen ATM switch vermittelt werden. Für die Vermittlung von Internet-Datenpaket bezogenen ATM-Zellen aus dem ATM-Zellenstrom wird von einem angeschlossenen ATM-Kommunikationsendgerät die Ziel-Adress-Information der Internet-Datenpakete mit Hilfe einer speziellen ATM-Zelle an das ATM-Kommunikationssystem übermittelt. Aus dieser wird im ATM-Kommunikationssystem eine Routinginformation aus der Ziel-Adress-Information abgeleitet. Anschließend wird die abgeleitete Routinginformation in jede ATM-Zelle eines Internet-Datenpaketes zum Vermitteln über ein ATM-Kommunikationsnetz eingefügt.

Aus der Druckschrift IEE, 1996, Flow Labelled IP: A Connectionless Approach to ATM, Peter Newman et al. ist ein ATM-Kommunikationsnetz bekannt, bei dem für den Anschluß von Internet-Kommunikationsendgeräten ein lokales Netzwerk LAN emuliert wird. Für die Vermittlung der Internet-Datenpakete ist ein "Connectionless ATM" vorgesehen. Innerhalb des ATM-Kommunikationsnetzes ist in den ATM-Kommunikationssystemen eine Signalisierung gemäß dem ATM-Adaption-Layer (AAL-5) vorgesehen.

Die der Erfindung zugrundeliegende Aufgabe besteht darin, die Integration von Internet in ATM-Kommunikationsnetze zu verbessern. Die Aufgabe wird durch die Merkmale des Anspruchs 1 gelöst.

Der wesentliche Aspekt der Erfindung ist darin zu sehen, daß die ATM-Kommunikationssysteme zum Vermitteln von in ATM-Zellen verpackte Daten und Datenpaketen zusätzlich für die Vermittlung von Internet-Datenpaketen Mittel zum Selektieren von Internet-Datenpaket bezogenen ATM-Zellen aus dem ATM-Zellenstrom, Mittel zum Auffinden von Internet-Datenpaket-Köpfen aus den selektierten ATM-Zellen und Mittel zum Extrahieren der in Internet-Datenpaket-Köpfen enthaltenen Ziel-Adress-Information vorgesehen sind. Vorteilhaft sind zusätzliche Mittel zum Sortieren der vermittelten ATM-Zellen zu den jeweiligen Internet-Datenpaketen und Mittel zum Internet-Datenpaket-individuellen Aufsammeln der sortierten ATM-Zellen und Internet-Datenpaket-weisen Weiterleiten vorgesehen.

Durch die vollständige Integration der Internet-Routingfunktion in die ATM-Kommunikationssysteme kann der ATM-Zellenstrom innerhalb des ATM-Kommunikationsnetzes erheblich reduziert werden, da ein Routing der Internet-Datenpakete ggfs. über mehrere ATM-Kommunikationssysteme zu den betreffenden Internet-ATM-Routern entfällt. Dies bedeutet, daß auf die Internet-ATM-Router gänzlich verzichtet werden kann, wobei die Integration der Internet-Routingfunktion in die ATM-Kommunikationssysteme mit geringem zusätzlichen schaltungstechnischen und programmtechnischen Aufwand erreicht werden kann. Die bereits existierenden Komponenten der ATM-Kommunikationssysteme bleiben unverändert, d.h. müssen nicht modifiziert werden. Durch die Integration werden minimalste Verzögerungen der zu übermittelnden Internet-Datenpakete erreicht, da ein Routen zu Internet-ATM-Routern entfällt. Ein weiterer Vorteil ist bei einer Integration, insbesondere einer nachträglichen Integration, darin zu sehen, daß der Nicht-Internet-Datenpaket bezogene ATM-Verkehr nicht beeinflußt wird. Des weiteren kann ein universelles ATM-Kommunikationsnetz für unterschiedliche Verkehrs- und Dienstarten geschaffen werden, das in Abhängigkeit von Nutzerbedürfnissen mit geringstem Aufwand konfiguriert und auf die jeweiligen Erfordernisse angepaßt werden kann, wobei die Internet-Routingfunktion jederzeit nachgerüstet oder entfernt werden kann.

Bei einer Integration der zusätzlichen Mittel zum Vermitteln der Internet-Datenpaket bezogenen ATM-Zellen sind diese vorteilhaft in Abhängigkeit von der Systemarchitektur des ATM-Kommunikationssystems den einzelnen Systemkomponenten zugeordnet - Anspruch 3. Hierbei ist sowohl die Konzeption des ATM-Kommunikationssystems mit ATM-Multiplexern, Leitungsanschlußeinheiten, ATM-Vermittlungs-Netzwerken und alternativ von ATM-Statistik-Multiplexern als auch das zugrundeliegende ATM-Vermittlungsprinzip innerhalb des ATM-Kommunikationssystems - z.B. Self-Routingprinzip mit Kommunikationssystem-internen Header und einer Verbindungsidentifikation - zu berücksichtigen. Besonders vorteilhaft ist eine Integration der zusätzlichen Mittel zum Vermitteln der Internet-Datenpaket bezogenen ATM-Zellen zwischen den Kommunikations-Anschlüssen und dem ATM-Vermittlungs-Netzwerk - Anspruch 4 -, da hierbei die Integration direkt im Datenpfad, d.h. im vorhandenen Vermittlungspfad für ATM-Zellen erfolgt. Bei dieser Integration wird eine Übermittlung von zusätzlichen Informationen für die Ermittlung der Routinginformation innerhalb des ATM-Kommunikationssystems weitgehend vermieden.

Für die Integration der zusätzlichen Mittel zum Vermitteln der Internet-Datenpaket bezogenen ATM-Zellen sind fünf vorteilhafte Realisierungsvarianten - Anspruch 5 bis 9 - möglich, die auf einer ATM-Kommunikationssystem-Konzeption basieren, bei der ATM-Kommunikations-Anschlüsse realisierende Leitungseinheiten mit zumindest einem ATM-Multiplexer zum Multiplexen von von den Leitungseinheiten übermittelten ATM-Zellen verbunden sind und zumindest ein eingangseitig mit ATM-Multiplexern verbundener ATM-Statistik-Multiplexer zur Zwischenspeicherung und statistischen Verteilung der ATM-Zellen sowie ein mit dem zumindest einem ATM-Statistik-Multiplexer verbundenes ATM-Vermittlungs-Netzwerk vorgesehen ist.

Die vorteilhafteste Integration,in einem derart konzipierten ATM-Kommunikationssystem stellt die Integration der zusätzlichen Mittel zum Vermitteln von Internet-Datenpaket bezogenen ATM-Zellen im Statistik-Multiplexer dar - Anspruch 6. Hierbei kann vorteilhaft ein einziger Pufferspeicher für die Zwischenspeicherung von ATM-Zellen-Warteschlangen sowohl für Internet-Datenpaket bezogenen als auch Nicht-Internet-Datenpaket bezogenen ATM-Zellen eingesetzt und die vorhandenen Mittel zum Einfügen von zum ATM-Vermittlungs-Netzwerk oder zum ATM-Multiplexer zu übermittelnde ATM-Zellen mitbenutzt werden. Des weiteren werden durch die Integration der zusätzlichen Mittel zum Vermitteln der Internet-Datenpaket bezogenen ATM-Zellen in die beim ATM-Forum standardisierten Traffic-Management- und Quality of Service-Verfahren, die im ATM-Statistik-Multiplexer realisiert sind, einbezogen. Hierbei können die Internetverbindungen hinsichtlich ihrer Service-Klasse in die Gesamtkonzeption des ATM-Kommunikationssystems zur Behandlung von ATM-Verbindungen unterschiedlicher Klassen - beispielsweise 'Real Time'- oder 'Non Real Time'-Verbindungen mit UBR (unspecified Bitrate), ABR (available Bitrate) usw. - eingebunden werden, wodurch der Integrations-Aufwand erheblich reduziert wird.

Eine vorteilhafte Weiterbildung des erfindungsgemäßen Kommunikationssystems ist darin zu sehen, daß bei einer Vermittlung von Internet bezogenen ATM-Zellen mit vorgegebener, virtueller Pfadinformation und/oder virtueller Kanalinformation Mittel zum Selektieren von Internet-Datenpaket bezogenen ATM-Zellen in Abhängigkeit von der vorgegebenen virtuellen Pfadinformation und/oder virtuellen Kanalinformation vorgesehen sind - Anspruch 13. Durch die Zuordnung bzw. Vorgabe bestimmter virtueller Pfade für Internet-Datenpakete ist eine vorteilhafte Realisierung für die Erkennung von Internet-Datenpaket bezogenen ATM-Zellen möglich. Bei einer Vermittlung nach dem Self-Routing-Prinzip sind bei einer Vermittlung von Internet-Datenpaket bezogenen ATM-Zellen mit einer vorgegebenen, von der virtuellen Pfadinformation und/oder virtuellen Kanalinformation abgeleiteten Kommunikationssystem-internen Routinginformation und einer Verbindungsidentifikation Mittel zum Selektieren von Internet-Datenpaket bezogenen ATM-Zellen in Abhängigkeit von der vorgegebenen, Kommunikationssystem-internen Routinginformation und einer Verbindungsidentifikation vorgesehen - Anspruch 14.

Gemäß einer weiteren vorteilhaften Ausgestaltung des erfindungsgemäßen ATM-Kommunikationssystems umfassen die Mittel zum Extrahieren der in Internet-Datenpaket-Köpfen enthaltenen Ziel-Adress-Information Mittel zum Auffinden der in den Internet-Datenpaket-Köpfen eingefügten Ziel-Adress-Information und Mittel zum Weiterleiten der Ziel-Adress-Information an die Mittel zum Ableiten einer Routinginformation aus der Ziel-Adress-Information - Anspruch 15. Diese Mittel sind überwiegend programmtechnisch im ATM-Statistik-Multiplexer realisiert.

Nach einer Weiterbildung des erfindungsgemäßen ATM-Kommunikationssystems sind bei Internet-Datenpaket bezogenen ATM-Zellen mit einer Internet-Multicast-Ziel-Adress-Information im Internet-Datenpaket-Kopf Mittel zur Zuordnung weiterer Routinginformationen zu einer Internet-Multicast-Ziel-Adress-Information in der Routingtabelle und Mittel zum Kopieren der jeweiligen ATM-Zellen und Einfügen jeweils einer weiteren Routinginformation vorgesehen - Anspruch 19. Durch die Speicherung mehrerer Kommunikationsnetz-Routinginformation zu einer Internet-Zieladress-Information ist ein Kopieren und Übermitteln von Internet-Datenpaket bezogenen ATM-Zellen an mehrere ATM-Kommunikationssysteme des ATM-Kommunikationsnetzes möglich, wobei in den die diese ATM-Zellen empfangen den ATM-Kommunikationssystemen ggfs. nach einer weiteren Bewertung der Internet-Zieladress-Information weitere 'Multicast'-Routinginformationen ermittelt und eingefügt werden.

Weitere vorteilhafte Ausgestaltungen der Erfindung sind den weiteren Ansprüchen zu entnehmen.

Im folgenden wird die Erfindung anhand dreier Blockschaltbilder näher erläutert. Dabei zeigen
- FIG 1: in einem Blockschaltbild die Struktur eines ATM-Kommunikationssystems,
- FIG 2: in einem Blockschaltbild die Integration der Internet-Routing-Funktion zwischen ATM-Multiplexer und ATM-Statistik-Multiplexer des Kommunikationssystems nach FIG 1 und
- FIG 3: in einem Blockschaltbild die Integration der Internet-Routing-Funktion in den ATM-Statistik-Multiplexer des Kommunikationssystems nach FIG 1.

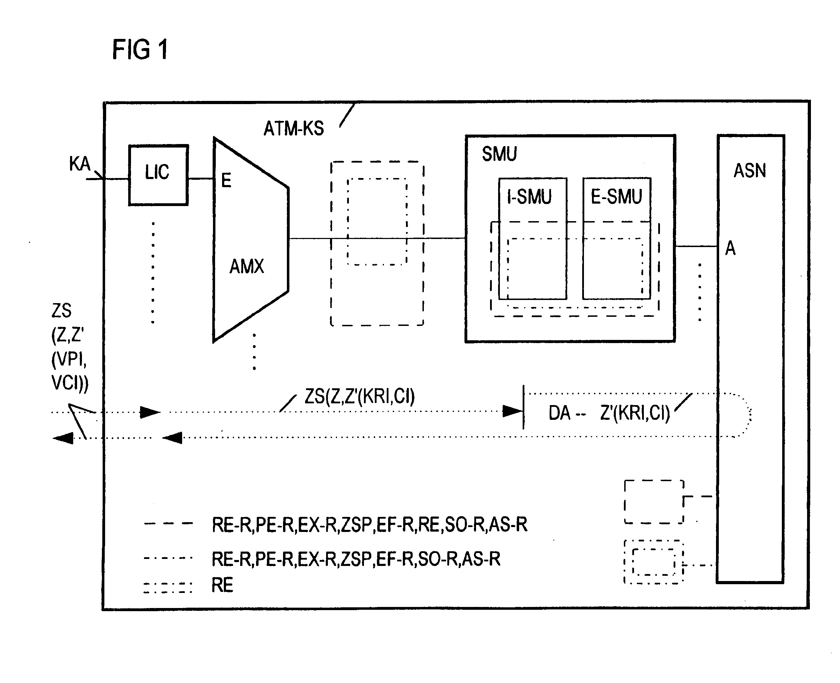

FIG 1 zeigt ein ATM-Kommunikationssystem ATM-KS, das als zentrale Vermittlungskomponente ein ATM-Vermittlungs-Netzwerk ASN aufweist. Das ATM-Vermittlungs-Netzwerk ASN stellt ein mehrstufiges ATM-Koppelfeld dar, welches in den unterschiedlichen Stufen Vermittlungselemente mit Warteschlangensteuerungen für die Vermittlung von 'real time' und 'non real time' ATM-Zellen umfaßt. Hierzu enthalten die Vermittlungselemente Zwischenspeicher bzw. Buffer, mit deren Hilfe die Ausgangs-Warteschlangen gesteuert werden. Das ATM-Vermittlungs-Netzwerk ASN weist beispielsweise acht 2.4 Gbit/s-Eingänge E auf, an die jeweils ein ATM-Statistik-Multiplexer SMU angeschlossen werden kann.

Der ATM-Statistik-Multiplexer SMU weist 'Ingress' und 'Egress'- Multiplex-Funktionen bzw. -Einheiten I-SMU,E-SMU auf, wobei die Ingress-Funktion für die zum ATM-Vermittlungs-Netzwerk ASN und die Egress-Funktion für die Behandlung der ATM-Zellen vom ATM-Vermittlungs-Netzwerk ASN vorgesehen sind. Der ATM-Statistik-Multiplexer SMU realisiert ein ATM-Zellen-Verkehrsmanagement insbesondere für die Quality of Service-Funktionen. Bei beispielsweise nach dem ATM-Forum-standardisierten 'Quality of Service' werden beispielsweise die Verkehrsklassen 'Real time' und 'Non real time' oder Verbindungen mit UBR(Unspecified Bitrate) ABR(Available Bitrate) usw. unterschieden, für die jeweils die betreffenden ATM-Zellen in unterschiedlichen Warteschlangen statistisch gemultiplext werden. Für das ATM-Zellen-Verkehrsmanagement ist ein großer Zwischenspeicher bzw. Buffer vorgesehen, der mit Hilfe eines komplexen Buffer-Managements und ATM-Zellen-Scheduling gesteuert wird.

Die ATM-Statistik-Multiplexer SMU sind über entsprechende Eingänge mit ATM-Multiplexer AMX verbunden, deren Eingänge E jeweils an eine Leitungsanschlußeinheit LIC geführt sind. Die Leitungsanschlußeinheiten LIC weisen jeweils einen Ausgang mit beispielsweise einer Übermittlungsgeschwindigkeit von 155 Mbit/s auf und realisieren einen Kommunikationsanschluß KA, an den Internet-Datenpaket bezogene oder Nicht-Internet-Datenpaket bezogene ATM-Zellen beispielsweise von Internet-Kommunikationseinrichtungen geführt werden. Die Leitungsanschlußeinheiten LIC sind beispielsweise für den Anschluß von ATM-Kommunikationssystemen oder ATM-Kommunikationsendgeräten - nicht dargestellt - konzipiert, wobei auch ATM-Kommunikationsendgeräte mit Internet-Protokollen bzw. Internet-Funktionen anschließbar sind. Die Internet-Datenpakete IDP sowie auch Nicht-Internet-Datenpakete DP von den weiteren ATM-Kommunikationseinrichtungen werden in ATM-Zellen Z'Z eingefügt, wobei die vermittlungstechnischen Adressen der Internet-Datenpakete IDP durch eine im Zellkopf des jeweiligen Internet-Datenpakets durch eine Internet-Ursprungs- und Ziel-Adresse-Inforamtion bzw. Source- bzw. Destination-Adresse DA repräsentiert ist. Die Internet-Datenpaket bezogenen ATM-Zellen Z' werden durch vorgegebene beim Verbindungsaufbau und während der Verbindung vorgegebene virtuelle Pfadinformation PVI und/oder virtuelle Kanalinformation VCI als solche bestimmt, d.h. die virtuellen Pfade bzw. Kanäle für Internet sind festgelegt - in FIG 1 durch ZS (Z, Z' (VPI,VCI) angedeutet.

In der Leitungsanschlußeinheit LIC werden für ein Self-Routing der ATM-Zellen Z,Z' im ATM-Vermittlungs-Netzwerk ASN aus den virtuellen Pfad- und Kanalinformationen VPI, VCI der Internet-Datenpaket bezogenen ATM-Zellen Z' verbindungsindividuell Kommunikationssystem-interne Routinginformationen KRI und Verbindungsidentifikationen CI abgeleitet und in einem zusätzlichen Zellkopf ZK der jeweiligen ATM-Zelle Z,Z' vorangestellt und über den ATM-Multiplexer AMX an den ATM-Statistik-Multiplexer SMU weitergeleitet- in FIG 1 durch ZS (Z,Z' (KRI,CI) angedeutet.

FIG 1 zeigt weiterhin fünf Varianten hinsichtlich der Integration der Mitteln zum Vermitteln von Internet-Datenpaket bezogenen ATM-Zellen (Z') im ATM-Kommunikationssystem ATM-KS. Hierbei sind alle vorgesehenen Mittel RE-R,PE-R,EX-R,ZSP,RE, EF-R,SO-R,AS-R zum Vermitteln von Internet-Datenpaketen PD durch gestrichelte Rechtecke dargestellt, wobei die Mittel RE-R,PE-R,EX-R,ZSP,RE,EF-R,SO-R,AS-R zwischen ATM-Multiplexer AMX und ATM-Statistik-Multiplexer SMU oder im ATM-Statistik-Multiplexer SMU realisiert oder dem ATM-Vermittlungs-Netzwerk ASN zugeordnet sind. Die strich-punktierten Rechte umfassen alle Mittel RE-R, PE-R, EX-R, ZSP, EF-R, SO-R, AS-R zum Vermitteln von Internet-Datenpaket bezogenen ATM-Zellen Z' außer dem Mittel RE zum Ableiten einer vom Mittel zum Extrahieren einer Ziel-Adress-Information DA empfangenen Routinginformation RI aus der Ziel-Adress-Information DA und deren Weiterleitung an das Mittel ZK-U zum Einfügen der Routinginformation RI in jede ATM-Zelle Z'. Bei anderen ATM-Kommunikationssystem-Strukturen, beispielsweise ohne ATM-Statistik-Multiplexer SMU, können die Mittel RE-R,PE-R,EX-R,ZSP,EF-,SO-R,AS-R zum Vermitteln von Internet-Datenpaket bezogenen ATM-Zellen Z' auch in den verbleibenden Komponenten, d.h. im ATM-Multiplexer AMX oder in den Leitungsanschlußeinheiten LIC angeordnet bzw. implementiert werden.

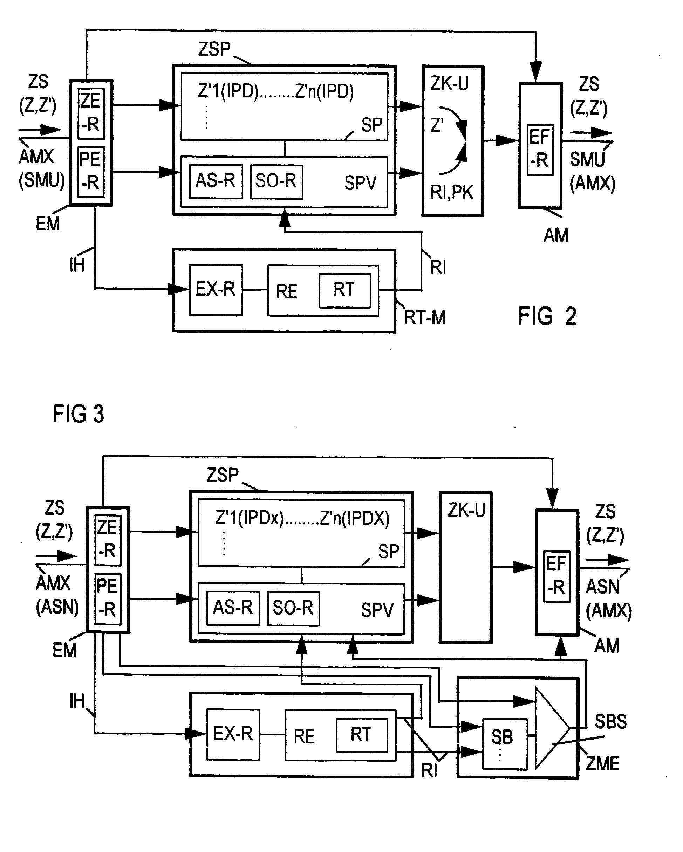

FIG 2 und FIG 3 zeigen die beiden vorteilhaftesten Realisierungsvarianten, bei denen alle vorgesehenen Mittel RE-R,PER,EX-R,ZSP,RE,EF-R,AS-R,SO-R zum Vermitteln von Internet-Datenpaketen IPD zwischen dem ATM-Multiplexer AMX und dem ATM-Statistik-Multiplexer SMU - FIG 2 - oder im ATM-Statistik-Multiplexer SMU - FIG 3 - angeordnet sind.

Im folgenden werden FIG 2 und FIG 3 zusammen erläutert, da mehrere Komponenten bzw. Mittel gleichartig realisiert sind, d.h. gleichartige Funktionen aufweisen, wobei jeweils eine Ingress-Einheit I-SMU dargestellt ist und die Engress-Funktion anhand der FIG 2 und FIG 3 zusätzlich erläutert wird. Die Figuren zeigen jeweils ein Eingangsmodul EM, in dem eine die Internet-Datenpaket bezogene ATM-Zellen Z' erkennenden Zellerkennungs-Routine ZE-R und eine die Internet-Paketköpfe IH der Internet-Datenpakete IDP erkennende Internet-Paketkopf-Erkennungs-Routine PE-R realisiert ist. Die Erkennung der Internet-Datenpaket bezogenen ATM-Zellen Z' wird beim Ausführungsbeispiel anhand der vorgegebenen, Kommunikationssystem-internen Routinginformationen KRI und den Verbindungsidentifikationen VI durchgeführt. Die Nicht-Internet-Datenpaket-bezogenen ATM-Zellen Z werden bei FIG 2 unter Umgehung der erfindungsgemäßen Anordnung an ein Ausgangsmodul AM weitergeleitet, in dem mit Hilfe einer in diesem realisierten Einfüge-Routine EF-R die Internet-Datenpaket bezogenen in die Nicht-Internet-Datenpaket bezogenen ATM-Zellen Z,Z' wieder zu einem ATM-Zellenstrom ZS(Z,Z') zusammengefügt bzw. gemultiplext werden. In FIG 3 werden nur die umgehend weiterzuleitenden 'Real Time'-ATM-Zellen Z an das Ausgangs-Modul weitergeleitet.

Die Internet-Datenpaket bezogenen ATM-Zellen Z' werden während der Bearbeitung des Internet-Paketkopfes IH in einem Zellenspeicher ZSP zwischengespeicher, der durch einen Speicher SP und eine Speicherverwaltung SPV gebildet ist. Die Internet-Paketköpfe IH werden an ein Router-Modul RT-M weitergeleitet, in dem eine Extrahier-Routine EX-R und eine Routing-Einheit RE realisiert ist. Mit Hilfe der Extrahier-Routine EX-R werden die in den Internet-Paketköpfen IH enthaltenen Internet-Ziel-Adressen DA extrahiert, d.h. aus einem beispielsweise gemäß dem standardisierten Internet-Protokoll Version 4 das 32 Byte umfassende Adress-Destination-Field oder nur die relevanten Teilfelder gelesen und an die Routing-Einheit RE weitergeleitet. In der Routing-Einheit RE wird mit Hilfe einer Routing-Tabelle RT eine ATM-Kommunikationsnetz-bezogene Routinginformation RI ermittelt und an die Speicherverwaltung SPV übermittelt. In der Routing-Tabelle RT ist jeder Internet-Ziel-Adresse DA eine ATM-Kommunikationsnetz-bezogene Routinginformation RI zugeordnet, wobei durch die Routinginformation RI dasjenige weitere ATM-Kommunikationssystem ATM-KS bestimmt, zu dem das jeweilige Internet-Datenpaket IDP zu vermitteln ist. Voraussetzung hierfür ist die Abbildung des Internet auf das ATM-Kommunikationsnetz, d.h. die Internet-Vermittlungspunkte sind auf das ATM-Kommunikationsnetz abgebildet. Die Routinginformation RI wird hierbei unter Berücksichtigung des eingesetzten ATM-Vermittlungsprinzips, beispielsweise 'Self-Routing'-Prinzip, gebildet, d.h. als Kommunikationssystem-interne Routinginformation KRI und als Verbindungsidentifikation CI. Die Routinginformation RI wird über die Speicherverwaltung SPV an einen Zellkopf-Umwerter ZK-U übermittelt und mit dessen Hilfe in jede vom Speicher SP zeitgerecht übermittelte ATM-Zelle Z' des betroffenen Internet-Datenpakets IPD die Routinginformation RI eingefügt.

Des weiteren wird mit Hilfe der Speicherverwaltung SPV für jedes Internet-Datenpaket IPD eine eindeutige Paketkennung PK vergeben, die mit Hilfe des Zellkopf-Umwerters ZK-U in jede ATM-Zelle Z' des jeweiligen Internet-Datenpakets IDP eingefügt wird. Die Paketkennung PK wird beim Ausführungsbeispiel in den zusätzlichen Zellkopf ZK einer ATM-Zelle Z' eingefügt. Hierbei wird der Beginn eines Internet-Datenpakets IDP dadurch ermittelt, daß eine in den ATM-Zellkopf ZK - insbesondere bei ATM-Zellen nach dem standardisierten ATM-Adaption Layer AAL 5 - eingefügte Datenpaketende-Kennung - nicht dargestellt - erkannt und die in der folgenden ATM-Zelle Z' enthaltenen Daten als Internet-Datenpaket-Anfang bzw. als erste ATM-Zelle Z' eines folgenden Internet-Datenpakets IDP bestimmt ist, die mit einer neuen eindeutigen Paketkennung PK versehen wird. Bei anders strukturierten ATM-Zellköpfen sind andere Verfahren zum Ermitteln der unterschiedlichen Internet-Datenpakete IDP vorzusehen, beispielsweise Suche nach Interret-Datenpaket-Köpfen oder Teilen davon.

Beim erfindungsgemäßen ATM-Kommunikationssystem ATM-KS werden die Routinginformationen VPI,VCI bzw. die umgewerteten Kommunikationssystem-internen Routinginformation KRI und Verbindungsidentifikation CI terminiert und mit Hilfe der Internet-Ziel-Adresse DA des jeweiligen Internet-Datenpakets IDP die eine Internet-Routing-Funktion realisierende Routinginformation RI für das ATM-Kommunikationsnetz gebildet, wobei das Internet durch die Routinginformation RI auf das ATM-Kommunikationsnetz abgebildet ist - in FIG 1 durch Z'(RI(KRI,CI) angedeutet.

Die zusätzlich Engress-Funktionen sind durch eine Sortier-Routine SO-R und durch eine Aufsammel-Routine AS-R und durch die Speicherverwaltung SPV realisiert. Hierbei werden die vom ATM-Vermittlungs-Netzwerk ASN über das Eingangs-Modul EM übermittelten und im Speicher SP gespeicherten Internet-Datenpaket bezogenen ATM-Zellen Z' in Internet-Datenpakete IDP mit Hilfe der mitübermittelten Paketkennungen PK in Internet-Datenpakete IDP entsprechend der Paketkennung PK sortiert und mit Hilfe der Aufsammel-Routine AS-R jeweils ein vollständiges Inter-Datenpaket IDP aufgesammelt.

Anschließend werden mit Hilfe des Zellkopf-Umwerters ZK-U die Kommunikationssystem-internen Routinginformation KRI und die Verbindungsidentifikation CI in Kommunikationsnetz-spezifische virtuelle Pfad- und Kanalinformationen VPI,VCI umgewertet und die mit umgewerteter Routinginformation RI versehenen ATM-Zellen Z' Internet-Datenpaket-weise mit Hilfe der Einfüge-Routine EF-R in den die bereits Nicht-Internet-Datenpaket bezogenen ATM-Zellen Z aufweisenden ATM-Zellenstrom ZS eingefügt. Dieser ATM-Zellenstrom ZS gelangt über einen ATM-Multiplexer AMX und über eine Leitungsanschlußeinheit LIC zu einem durch die Routinginformation RI bestimmten, weiteren ATM-Kommunikationssystem.

Bei der Integration nach FIG 3 werden alle ATM-Zellen Z, außer den 'Real Time'-Zellen einer Zellen-Management-Einrichtung ZME zugeführt, in der unter Berücksichtigung der standardisierten 'Quality of Service'-Aspekte die ATM-Zellen Z in die jeweiligen 'Quality of Service'-spezifischen Warteschlangen statistisch gemultiplext werden. Für die Realisierung dieser Funktionen ist ein zweistufiges Scheduling-Konzept vorgesehen, wobei in mehreren Scheduler Block SB und einem übergeordneten Scheduler SBS jeweils ein Teil der Warteschlangen logisch gebildet und gemultiplext und auch zur Weiterleitung abgerufen werden, wobei die ATM-Zellen Z,Z' selbst im Speicher SP zwischengespeichert werden und das Einfügen von Routinginformationen RI im Zellkopf-Umwerter ZK-U erfolgt.

## Patentansprüche

1. ATM-Kommunikationssystem (AKS) zum Vermitteln von ATM-Zellen (Z, Z') eines ATM-Zellenstromes (Z, Z'), bestehend aus in ATM-Zellen (Z) verpackten Datenpaketen (DP) für durch ATM-Kommunikationssysteme gebildete ATM-Kommunikationsnetze, in dem für die Vermittlung von Internet-Datenpaket bezogenen ATM-Zellen (Z') zusätzlich
- Mittel (ZE-R) zum Selektieren von Internet-Datenpaket bezogenen ATM-Zellen (Z') aus dem ATM-Zellenstrom (Z,Z'),
- Mittel (PE-R) zum Auffinden von Internet-Datenpaket-Köpfen (IH) aus den selektierten ATM-Zellen (Z'),
- Mittel (EX-R) zum Extrahieren der in Internet-Datenpaket-Köpfen (IH) enthaltenen Ziel-Adress-Information (DA),
- Mittel zum Ableiten (RE) einer Routinginformation (RI) aus der Ziel-Adress-Information (DA), und
- Mittel zum Einfügen (ZK-U,ZSP,EF-R) der abgeleiteten Routinginformation (RI) in jede ATM-Zelle (Z') eines Internet-Datenpaketes (IDP) und zum Vermitteln über das ATM-Kommunikationsnetz (ASN),
vorgesehen sind.

2. ATM-Kommunikationssystem nach Anspruch 1, **dadurch gekennzeichnet, daß**
- Mittel zum Sortieren (SO-R) der vermittelten ATM-Zellen (Z') zu den jeweiligen Internet-Datenpaketen (IDP) und
- Mittel (AS-R) zum Internet-Datenpaket-individuellen Aufsammeln der sortierten ATM-Zellen (Z') und Internet-Datenpaket-weisen Weiterleiten
vorgesehen sind.

3. ATM-Kommunikationssystem nach Anspruch 1 oder 2, **dadurch gekennzeichnet,**
**daß** die zusätzlichen Mittel (RE-R,PE-R,EX-R,ZSP,ZK-U,RE,EF-R,SO-R,AS-R) zum Vermitteln von Internet-Datenpaket bezogenen ATM-Zellen (Z') in Abhängigkeit von einer Ausgestaltung des ATM-Kommunikationssystems einzelnen Systemkomponenten zugeordnet sind.

4. ATM-Kommunikationssystem nach einem der Ansprüche 1 bis 3,
**dadurch gekennzeichnet,**
**daß** die zusätzlichen Mittel (RE-R,PE-R,EX-R,ZSP,ZK-U,RE,EF-R,SO-R,AS-R) zum Vermitteln von Internet-Datenpaket bezogenen ATM-Zellen (Z') zwischen ATM-Kommunikations-Anschlüssen (KA) des ATM-Kommunikationssystems und dessen ATM-Vermittlungs-Netzwerk (ASN) angeordnet sind.

5. ATM-Kommunikationssystem nach einem der Ansprüche 1 bis 4,
- mit ATM-Kommunikations-Anschlüsse (KA) realisierende Leitungseinheiten (LIC), die
- mit zumindest einem ATM-Multiplexer (AMX) zum Multiplexen von von den Leitungseinheiten (LIC) übermittelten ATM-Zellen (Z,Z') verbunden sind,
- mit zumindest einem eingangseitig mit ATM-Multiplexern (AMX) verbundenen ATM-Statistik-Multiplexer (SMU) zur Zwischenspeicherung und statistischen Verteilung der ATM-Zellen (Z,Z'),
- mit einem mit dem zumindest einem ATM-Statistik-Multiplexer (SMU) verbundenen ATM-Vermittlungs-Netzwerk (ASN),
**dadurch gekennzeichnet,**
- **daß** die zusätzlichen Mittel (RE-R,PE-R,EX-R,ZSP,ZK-U,RE,EF-R,SO-R,AS-R) zum Vermitteln von Internet-Datenpaket-bezogenen ATM-Zellen (Z') zwischen den ATM-Multiplexern (AMX) und den ATM-Statistik-Multiplexern (SMU) vorgesehen sind.

6. ATM-Kommunikationssystem nach einem der Ansprüche 1 bis 4,
- mit ATM-Kommunikations-Anschlüsse (KA) realisierende Leitungseinheiten (LIC), die
- mit zumindest einem ATM-Multiplexer (AMX) zum Multiplexen von von den Leitungseinheiten (LIC) übermittelten ATM-Zellen (Z,Z') verbunden sind,
- mit zumindest einem eingangseitig mit ATM-Multiplexern (AMX) verbundenen ATM-Statistik-Multiplexer (SMU) zur Zwischenspeicherung und statistischen Verteilung der ATM-Zellen (Z,Z'),
- mit einem mit dem zumindest einem ATM-Statistik-Multiplexer (SMU) verbundenen ATM-Vermittlungs-Netzwerk (ASN),
**dadurch gekennzeichnet,**
- **daß** die zusätzlichen Mittel (RE-R,PE-R,EX-R,ZSP,ZK-U,RE,EF-R,SO-R,AS-R) zum Vermitteln von Internet-Datenpaket-bezogenen ATM-Zellen (Z') im Statistik-Multiplexer (SMU) integriert sind.

7. ATM-Kommunikationssystem nach einem der Ansprüche 1 bis 3,
- mit ATM-Kommunikations-Anschlüsse (KA) realisierende Leitungseinheiten (LIC), die
- mit zumindest einem ATM-Multiplexer (AMX) zum Multiplexen von von den Leitungseinheiten (LIC) übermittelten ATM-Zellen (Z,Z') verbunden sind,
- mit zumindest einem eingangseitig mit ATM-Multiplexern (AMX) verbundenen ATM-Statistik-Multiplexer (SMU) zur Zwischenspeicherung und statistischen Verteilung der ATM-Zellen (Z,Z'),
- mit einem mit dem zumindest einem ATM-Statistik-Multiplexer (SMU) verbundenen ATM-Vermittlungs-Netzwerk (ASN),
**dadurch gekennzeichnet,**
- **daß** die zusätzlichen Mittel (RE-R,PE-R,EX-R,ZSP,ZK-U,RE,EF-R,SO-R,AS-R) zum Vermitteln von Internet-Datenpaket-bezogenen ATM-Zellen-(Z') dem ATM-Vermittlungs-Netzwerk (ASN) zugeordnet sind.

8. ATM-Kommunikationssystem nach einem der Ansprüche 1 bis 3,
- mit ATM-Kommunikations-Anschlüsse (KA) realisierende Leitungseinheiten (LIC), die
- mit zumindest einem ATM-Multiplexer (AMX) zum Multiplexen von von den Leitungseinheiten (LIC) übermittelten ATM-Zellen (Z,Z') verbunden sind,
- mit zumindest einem eingangseitig mit ATM-Multiplexern (AMX) verbundenen ATM-Statistik-Multiplexer (SMU) zur Zwischenspeicherung und statistischen Verteilung der ATM-Zellen (Z,Z'),
- mit einem mit dem zumindest einem ATM-Statistik-Multiplexer (SMU) verbundenen ATM-Vermittlungs-Netzwerk (ASN),
**dadurch gekennzeichnet,**
**daß** für die Vermittlung von Internet-Datenpaket bezogenen ATM-Zellen (Z')
- zwischen den ATM-Multiplexern (AMX) und den ATM-Statistik-Multiplexern (SMU)
-- Mittel (ZE-R) zum Selektieren von Internet-Datenpaketen bezogenen ATM-Zellen (Z') aus dem ATM-Zellenstrom (Z,Z'),
-- Mittel (PE-R) zum Auffinden von Internet-Datenpaket-Köpfen (IH) aus den selektierten ATM-Zellen (Z'),
-- Mittel (EX-R) zum Extrahieren der in Internet-Datenpaket-Köpfen (IH) enthaltenen Ziel-Adress-Information (DA) und Weiterleiten an Mittel zum Ableiten einer Routinginformation (RI),
-- Mittel (ZK-U,ZSP,EF-R) zum Einfügen der abgeleiteten, vom Mittel (RE) zum Ableiten einer Routinginformation (RI) empfangenen Routinginformation (RI) in jede ATM-Zelle (Z') eines Internet-Datenpaketes (IDP) und deren Weiterleitung an das ATM-Netzwerk (ASN),
-- Mittel (SO-R) zum Sortieren der vermittelten ATM-Zellen (Z') zu den jeweiligen Internet-Datenpaketen (IDP) und
-- Mittel (AS-R) zum Internet-Datenpaket-individuellen Aufsammeln der sortierten ATM-Zellen (Z') und Inter-Datenpaket-weisen Weiterleiten
- und dem ATM-Vermittlungs-Netzwerk (ASN) zugeordnete
- Mittel (RE) zum Ableiten einer vom Mittel zum Extrahieren einer Ziel-Adress-Information (DA) empfangenen Routinginformation (RI) aus der Ziel-Adress-Information (DA) und deren Weiterleitung an das Mittel (ZK-U,ZSP,EF-R) zum Einfügen der Routinginformation (RI) in jede ATM-Zelle (Z')
vorgesehen sind.

9. ATM-Kommunikationssystem nach einem der Ansprüche 1 bis 3,
- mit ATM-Kommunikations-Anschlüsse (KA) realisierende Leitungseinheiten (LIC), die
- mit zumindest einem ATM-Multiplexer (AMX) zum Multiplexen von von den Leitungseinheiten (LIC) übermittelten ATM-Zellen (Z,Z') verbunden sind,
- mit zumindest einem eingangsseitig mit ATM-Multiplexern (AMX) verbundenen ATM-Statistik-Multiplexer (SMU) zur Zwischenspeicherung und statistischen Verteilung der ATM-Zellen (Z,Z'),
- mit einem mit dem zumindest einem ATM-Statistik-Multiplexer (SMU) verbundenen ATM-Vermittlungs-Netzwerk (ASN),
**dadurch gekennzeichnet,**
**daß** für die Vermittlung von Internet-Datenpaket bezogenen ATM-Zellen (Z')
- in den ATM-Statistik- Multiplexern (SMU) integrierte
-- Mittel (ZE-R) zum Selektieren von Internet-Datenpaket bezogenen ATM-Zellen (Z') aus dem ATM-Zellenstrom (Z,Z'),
-- Mittel (PE-R) zum Auffinden von Internet-Datenpaket-Köpfen (IH) aus den selektierten ATM-Zellen (Z'),
-- Mittel (EX-R) zum Extrahieren der in Internet-Datenpaket-Köpfen (IH) enthaltenen Ziel-Adress-Information (DA) und Weiterleiten an Mittel (RE) zum Ableiten einer Routinginformation (RI),
-- Mittel (ZK-U,ZSP,EF-R) zum Einfügen der abgeleiteten, vom Mittel (RE) zum Ableiten einer Routinginformation (RI) empfangenen Routinginformation (RI) in jede ATM-Zelle (Z') eines Internet-Datenpaketes (IDP) und deren Weiterleitung an das ATM-Netzwerk (ASN),
-- Mittel (SO-R) zum Sortieren der vermittelten ATM-Zellen (Z') zu den jeweiligen Internet-Datenpaketen (IDP) und
-- Mittel (AS-R) zum Internet-Datenpaket-individuellen Aufsammeln der sortierten ATM-Zellen (Z') und Inter-Datenpaket-weisen Weiterleiten
- und dem ATM-Vermittlungs-Netzwerk (ASN) zugeordnete
- Mittel (RE) zum Ableiten einer vom Mittel (EX-R) zum Extrahieren einer Ziel-Adress-Information (DA) empfangenen Routinginformation (RI) aus der Ziel-Adress-Information (DA) und deren Weiterleitung an das Mittel (ZK-U,ZSP,EF-R) zum Einfügen der Routinginformation (RI) in jede ATM-Zelle (Z')
vorgesehen sind.

10. ATM-Kommunikationssystem nach einem der vorhergehenden Ansprüche, **dadurch gekennzeichnet,**
**daß** Mittel (SPV) zur eindeutigen Kennung (PK) von ATM-Zellen (Z') eines zu vermittelnden Internet-Datenpaketes (IDP) und Mittel (SO-R) zum Sortieren der vermittelten ATM-Zellen (Z') zu den jeweiligen Internet-Datenpaketen (IDP) in Abhängigkeit von der eindeutigen Kennung (PK) vorgesehen sind.

11. ATM-Kommunikationssystem nach einem der Ansprüche 1 bis 10, **dadurch gekennzeichnet,**
**daß** Mittel zum Vermitteln von ATM-Zellen (Z') jeweils eines Internet-Datenpaketes (IDP) an einen Ausgang des ATM-Vermittlungs-Netzwerks (ASN) vorgesehen sind.

12. ATM-Kommunikationssystem nach einem der vorhergehenden Ansprüche, **dadurch gekennzeichnet,**
**daß** die zusätzlichen Mittel zum Vermitteln von Internet-Datenpaket-bezogenen ATM-Zellen (Z') für unterschiedliche Internet-Protokolle (IP) mit einer paketorientierten Informationsübermittlung realisierbar sind.

13. ATM-Kommunikationssystem nach einem der vorhergehenden Ansprüche, **dadurch gekennzeichnet,**
**daß** bei einer Vermittlung von Internet-bezogenen ATM-Zellen (Z') mit vorgegebener, virtueller Pfadinformation (VPI) und/oder virtueller Kanalinformation (VCI),
Mittel zum Selektieren von Internet-Datenpaket bezogenen ATM-Zellen (Z') in Abhängigkeit von der vorgegebenen virtuellen Pfadinformation (VPI) und/oder virtuellen Kanalinformation (VCI) vorgesehen sind.

14. ATM-Kommunikationssystem nach einem der vorhergehenden Ansprüche, **dadurch gekennzeichnet,**
**daß** bei einer Vermittlung von Internet-Datenpaket bezogenen ATM-Zellen (Z') mit einer vorgegebenen, von der virtuellen Pfadinformation (VPI) und/oder virtuellen Kanalinformation (VCI) abgeleiteten Kommunikationssystem-internen Routinginformation (KRI) und einer Verbindungsidentifikation (CI) Mittel zum Selektieren von Internet-Datenpaket bezogenen ATM-Zellen (Z') in Abhängigkeit von der vorgegebenen, Kommunikationssystem-internen Routinginformation (KRI) und einer Verbindungsidentifikation (CI) vorgesehen sind.

15. ATM-Kommunikationssystem nach einem der vorhergehenden Ansprüche,
**dadurch gekennzeichnet,**
**daß** die Mittel (EX-R) zum Extrahieren der in Internet-Datenpaket-Köpfen (IH) enthaltenen Ziel-Adress-Information (DA)
- Mittel (EX-R) zum Auffinden der in den Internet-Datenpaket-Köpfen (IH) eingefügten Ziel-Adress-Information (DA) und
- Mittel (EX-R) zum Weiterleiten der Ziel-Adress-Information (DA) an die Mittel (RE) zum Ableiten einer Routinginformation (RI) aus der Ziel-Adress-Information (DA) umfassen.

16. ATM-Kommunikationssystem nach einem der vorhergenden Ansprüche, **dadurch gekennzeichnet,**
**daß** die Mittel (EX-R) zum Extrahieren der in Internet-Datenpaket-Köpfen (IH) enthaltenen Ziel-Adress-Information (DA) für unterschiedliche Internet-Datenpaket-Köpfe (IH) ausgestaltet sind.

17. ATM-Kommunikationssystem nach einem der vorhergenden Ansprüche, **dadurch gekennzeichnet,**
**daß** die Mittel (RE) zum Ermitteln der Routinginformation (RI)
- eine Routingtabelle (RT) und
- eine die Routingtabelle (RT) durchsuchende Suchroutine umfassen.

18. ATM-Kommunikationssystem nach einem der vorhergehenden Ansprüche, **dadurch gekennzeichnet,**
**daß** die Routinginformationen (RI) durch das Internet auf das ATM-Kommunikationsnetz abbildende, ATM-Kommunikationsnetzbezogene Routinginformation (RI) repräsentiert ist, und daß die Routinginformation (RI) durch eine virtuelle Pfadinformation (VPI) und/oder virtuelle Kanalinformation (VCI) oder durch eine Kommunikationssystem-interne Routinginformation (KRI) zusammen mit einer Verbindungsidentifikation (CI) repräsentiert sind, wobei die Kommunikationssystem-interne Routinginformation (KRI) zusammen mit einer Verbindungsidentifikation (CI) vor einer Weiterleitung an das ATM-Kommunikationsnetz in eine virtuelle Pfadinformation (VPI) und/oder virtuelle Kanalinformation (VCI) konvertiert wird.

19. ATM-Kommunikationssystem nach einem der vorhergehenden Ansprüche, **dadurch gekennzeichnet,**
**daß** bei Internet-Datenpaket bezogenen ATM-Zellen (Z') mit einer Internet-Multicast-Ziel-Adress-Information (MDA) im Internet-Datenpaket-Kopf (IH)
- Mittel zur Zuordnung weiterer Routinginformationen (RI) zu einer Internet-Multicast-Ziel-Adress-Information (MDA) in der Routingtabelle (RT), und
- Mittel zum Kopieren der jeweiligen ATM-Zellen (Z') und Einfügen jeweils einer weiteren Routinginformation (RI) vorgesehen sind.

20. ATM-Kommunikationssystem nach einem der vorhergehenden,
**dadurch gekennzeichnet,**
**daß** bei der Vermittlung von Internet-Datenpaket bezogenen ATM-Zellen (Z') ein ATM-Zellen-Zwischenspeicher (ZSP) für eine Zwischenspeicherung der ATM-Zellen (Z') während der vermittlungstechnischen Bearbeitung und für eine ATM-Zellenstrom-konformes Weiterleiten der selektierten ATM-Zellen (Z') vorgesehen ist.

21. ATM-Kommunikationssystem nach einem der vorhergehenden,
**dadurch gekennzeichnet,**
**daß** Mittel zum Bilden und Bearbeiten von ATM-Zellen gemäß dem standardisierten ATM-Adaption Layer AAL 5 ausgestaltet sind, wobei in diesen ATM-Zellen (Z) eine das Ende eines Datenpakets (DP) oder Internet-Datenpakets (IPD) anzeigende Paketendeinformation enthalten ist.

## Claims

1. ATM communications system (AKS) for switching ATM cells (Z, Z') of an ATM cell stream (Z, Z'), said ATM cell stream comprising data packets (DP) packed into ATM cells (Z) for ATM communications networks formed by ATM communications systems, in which the following items are also provided for switching ATM cells (Z') related to Internet data packets:
- means (ZE-R) for selecting ATM cells (Z') related to Internet data packets from the ATM cell stream (Z, Z'),
- means (PE-R) for finding Internet data packet headers (IH) from the selected ATM cells (Z'),
- means (EX-R) for extracting destination address information (DA) contained in Internet data packet headers (IH),
- means (RE) for deriving routing information (RI) from the destination address information (DA) and
- means (ZK-U, ZSP, EF-R) for inserting the derived routing information (RI) into each ATM cell (Z') of an Internet data packet (IDP) and for switching it via the ATM communications network (ASN).

2. ATM communications system as claimed in claim 1., **characterised in that** the following items are provided:
- means (SO-R) for sorting switched ATM cells (Z') to form respective Internet data packets (IDP) and
- means (AS-R) for collecting the sorted ATM cells (Z') on the basis of individual Internet data packets and passing them on as Internet data packets.

3. ATM communications system as claimed in claim 1 or 2, **characterised in that** the additional means (RE-R, PE-R, EX-R, ZSP, ZK-U, RE, EF-R, SO-R, AS-R) for switching ATM cells (Z') related to Internet data packets are assigned to individual system components as a function of a refinement of the ATM communications system.

4. ATM communications system as claimed in one of claims 1 to 3, **characterised in that** the additional means (RE-R, PE-R, EX-R, ZSP, ZK-U, RE, EF-R, SO-R, AS-R) for switching ATM cells (Z') related to Internet data packets are arranged between ATM communications connections (KA) of the ATM communications system and its ATM switching network (ASN).

5. ATM communications system as claimed in one of claims 1 to 4,
- with line units (LIC) which provide ATM communications connections (KA), which
- are connected to at least one ATM multiplexer (AMX) for multiplexing ATM cells (Z, Z') transmitted by the line units (LIC),
- with at least one ATM statistics multiplexer (SMU) which is connected on the input side to ATM multiplexers (AMX) for buffer storage and statistical distribution of the ATM cells (Z, Z'),
- with an ATM switching network (ASN) connected to the at least one ATM statistics multiplexer (SMU),
**characterised in that**
- the additional means (RE-R, PE-R, EX-R, ZSP, ZK-U, RE, EF-R, SO-R, AS-R) for switching ATM cells (Z') related to Internet data packets are provided between the ATM multiplexers (AMX) and the ATM statistics multiplexers (SMU).

6. ATM communications system as claimed in one of claims 1 to 4,
- with line units (LIC) which provide ATM communications connections (KA), which
- are connected to at least one ATM multiplexer (AMX) for multiplexing ATM cells (Z, Z') transmitted by the line units (LIC),
- with at least one ATM statistics multiplexer (SMU) which is connected on the input side to ATM multiplexers (AMX) for buffer storage and statistical distribution of the ATM cells (Z, Z'),
- with an ATM switching network (ASN) connected to the at least one ATM statistics multiplexer (SMU),
**characterised in that**
- the additional means (RE-R, PE-R, EX-R, ZSP, ZK-U, RE, EF-R, SO-R, AS-R) for switching ATM cells (Z') related to Internet data packets are integrated in the statistics multiplexer (SMU).

7. ATM communications system as claimed in one of claims 1 to 3,
- with line units (LIC) which provide ATM communications connections (KA), which
- are connected to at least one ATM multiplexer (AMX) for multiplexing ATM cells (Z, Z') transmitted by the line units (LIC),
- with at least one ATM statistics multiplexer (SMU) which is connected on the input side to ATM multiplexers (AMX) for buffer storage and statistical distribution of the ATM cells (Z, Z'),
- with an ATM switching network (ASN) connected to the at least one ATM statistics multiplexer (SMU),
**characterised in that**
- the additional means (RE-R, PE-R, EX-R, ZSP, ZK-U, RE, EF-R, SO-R, AS-R) for switching ATM cells (Z') related to Internet data packets are assigned to the ATM switching network (ASN).

8. ATM communications system as claimed in one of claims 1 to 3,
- with line units (LIC) which provide ATM communications connections (KA), which
- are connected to at least one ATM multiplexer (AMX) for multiplexing ATM cells (Z, Z') transmitted by the line units (LIC),
- with at least one ATM statistics multiplexer (SMU) which is connected on the input side to ATM multiplexers (AMX) for buffer storage and statistical distribution of the ATM cells (Z, Z'),
- with an ATM switching network (ASN) connected to the at least one ATM statistics multiplexer (SMU),
**characterised in that**
the following items are provided for switching ATM cells (Z') related to Internet data packets
- between the ATM multiplexers (AMX) and the ATM statistics multiplexers (SMU)
-- means (ZE-R) for selecting ATM cells (Z') related to Internet data packets from the ATM cell stream (Z, Z'),
-- means (PE-R) for finding Internet data packet headers (IH) from the selected ATM cells (Z'),
-- means (EX-R) for extracting destination address information (DA) contained in Internet data packet headers (IH) and passing it on to means for deriving routing information (RI),
-- means (ZK-U, ZSP, EF-R) for inserting the derived routing information (RI) received from the means (RE) for deriving routing information (RI) into each ATM cell (Z') of an Internet data packet (IDP) and for passing it on to the ATM network (ASN),
-- means (SO-R) for sorting the switched ATM cells (Z') to form the respective Internet data packets (IDP) and
-- means (AS-R) for collecting the sorted ATM cells (Z') on the basis of individual Internet data packets and passing them on as Internet data packets.
- and assigned to the ATM switching network (ASN)
- means (RE) for deriving routing information (RI) received from the means for extracting destination address information (DA) from the destination address information (DA) and passing it on to the means (ZK-U, ZSP, EF-R) for inserting the routing information (RI) into each ATM cell (Z').

9. ATM communications system as claimed in one of claims 1. to 3,
- with line units (LIC) which provide ATM communications connections (KA), which
- are connected to at least one ATM multiplexer (AMX) for multiplexing ATM cells (Z, Z') transmitted by the line units (LIC),
- with at least one ATM statistics multiplexer (SMU) which is connected on the input side to ATM multiplexers (AMX) for buffer storage and statistical distribution of the ATM cells (Z, Z'),
- with an ATM switching network (ASN) connected to the at least one ATM statistics multiplexer (SMU),
**characterised in that**
the following items are provided for switching ATM cells (Z') related to Internet data packets
- integrated in the ATM statistics multiplexers (SMU)
-- means (ZE-R) for selecting ATM cells (Z') related to Internet data packets from the ATM cell stream (Z, Z'),
-- means (PE-R) for finding Internet data packet headers (IH) from the selected ATM cells (Z'),
-- means (EX-R) for extracting destination address information (DA) contained in Internet data packet headers (IH) and passing it on to means (RE) for deriving routing information (RI),
-- means (ZK-U, ZSP, EF-R) for inserting the derived routing information (RI) received from the means (RE) for deriving routing information (RI) into each ATM cell (Z') of an Internet data packet (IDP) and for passing it on to the ATM network (ASN),
-- means (SO-R) for sorting the switched ATM cells (Z') to form the respective Internet data packets (IDP) and
-- means (AS-R) for collecting the sorted ATM cells (Z') on the basis of individual Internet data packets and passing them on as Internet data packets.
- and assigned to the ATM switching network (ASN)
- means (RE) for deriving routing information (RI) received from the means for extracting destination address information (DA) from the destination address information (DA) and passing it on to the means (ZK-U, ZSP, EF-R) for inserting the routing information (RI) into each ATM cell (Z').

10. ATM communications system as claimed in one of the preceding claims, **characterised in that**
means (SPV) are provided for the unique identification (PK) of ATM cells (Z') of an Internet data packet (IDP) to be switched and means (SO-R) are provided to sort the switched ATM cells (Z') to form respective Internet data packets (IDP) as a function of the unique identifier (PK).

11. ATM communications system as claimed in one of claims 1 to 10, **characterised in that**
means are provided for switching ATM cells (Z') of an Internet data packet (IDP) respectively to an output of the ATM switching network (ASN).

12. ATM communications system as claimed in one of the preceding claims, **characterised in that**
the additional means for switching ATM cells (Z') related to Internet data packets can be implemented for different Internet protocols (IP) with a packet-oriented information transmission.

13. ATM communications system as claimed in one of the preceding claims, **characterised in that**
when switching Internet-related ATM cells (Z') using predetermined, virtual path information (VPI) and/or virtual channel information (VCI),
means are provided for selecting ATM cells (Z') related to Internet data packets as a function of the predetermined virtual path information (VPI) and/or virtual channel information (VCI).

14. ATM communications system as claimed in one of the preceding claims, **characterised in that**
when switching ATM cells (Z') related to Internet data packets using predetermined routing information, which is derived from the virtual path information (VPI) and/or virtual channel information (VCT) and is internal to the communications system, and a connection identifier (CI),
means are provided for selecting ATM cells (Z') related to Internet data packets as a function of the predetermined routing information (KRI) internal to the communications system and a connection identifier (CI).

15. ATM communications system as claimed in one of the preceding claims, **characterised in that**
- the means (EX-R) for extracting the destination address information (DA) contained in Internet data packet headers (IH) comprise
- means (EX-R) for finding the destination address information (DA) inserted in the Internet data packet headers (IH) and
- means (EX-R) for passing on the destination address information (DA) to the means (RE) for deriving routing information (RI) from the destination address information (DA).

16. ATM communications system as claimed in one of the preceding claims, **characterised in that**
- the means (EX-R) for extracting the destination address information (DA) contained in Internet data packet headers (IH) are designed for different Internet data packet headers (IH).

17. ATM communications system as claimed in one of the preceding claims, **characterised in that** the means (RE) for determining the routing information (RI) comprise
- a routing table (RT) and
- a search routine which searches the routing table (RT).

18. ATM communications system as claimed in one of the preceding claims, **characterised in that**
the routing information (RI) is represented by the routing information (RI) related to the ATM communications network and mapping the Internet onto the ATM communications network and that the routing information (RI) is represented by virtual path information (VPI) and/or virtual channel information (VCI) or by routing information (KRI) internal to the communications system together with a connection identifier (CI), the routing information (KRI) internal to the communications system being converted together with a connection identifier (CI) to virtual path information (VPI) and/or virtual channel information (VCI) before being passed on to the ATM communications network.

19. ATM communications system as claimed in one of the preceding claims, **characterised in that**
in the case of ATM cells (Z') related to Internet data packets with Internet multicast destination address information (MDA) in the Internet data packet header (IH)
- means are provided for assigning further routing information (RI) to Internet multicast destination address information (MDA) in the routing table (RT) and
- means are provided for copying the respective ATM cells (Z') and inserting further routing information (RI) in each instance.

20. ATM communications system as claimed in one of the preceding claims, **characterised in that**
when switching ATM cells (Z') related to Internet data packets, an ATM cell buffer store or buffer (ZSP) is provided for buffer storage of the ATM cells (Z') during processing for switching purposes and for passing on the selected ATM cells (Z') in a manner that is compliant with the ATM cell stream.

21. ATM communications system as claimed in one of the preceding claims, **characterised in that**
means are designed for forming and processing ATM cells in accordance with the standardised ATM adaption layer AAL 5, with packet end information indicating the end of a data packet (DP) or Internet data packet (IDP) being contained in these ATM cells (Z).

## Revendications

1. Système de communication ATM (AKS) pour la transmission de cellules ATM (Z, Z') d'un flux de cellules ATM (Z, Z'), comprenant des paquets de données (DP) conditionnés en cellules ATM (Z) pour des réseaux de communication ATM formés par des systèmes de communication ATM, dans lequel, pour la transmission de cellules ATM (Z') spécifiques au paquet de données Internet, il est prévu en supplément
- des moyens (ZE-R) pour la sélection de cellules ATM (Z') spécifiques au paquet de données Internet à partir du flux de cellules ATM (Z/Z'),
- des moyens (PE-R) pour la recherche d'en-têtes de paquet de données Internet (IH) à partir des cellules ATM (Z') sélectionnées,
- des moyens (EX-R) pour l'extraction de l'information d'adresse de destination (DA) contenue dans des en-têtes de paquet de données Internet (IH),
- des moyens pour la déduction (RE) d'une information de routage (RI) à partir de l'information d'adresse de destination (DA), et
- des moyens pour l'insertion (ZK-U, ZSP, EF-R) de l'information de routage (RI) déduite dans chaque cellule ATM (Z') d'un paquet de données Internet (IDP) et pour la transmission par le réseau de communication ATM (ASN).

2. Système de communication ATM selon la revendication 1, **caractérisé en ce qu'**il est prévu
- des moyens pour le tri (SO-R) des cellules ATM (Z') transmises aux paquets de données Internet (IDP) respectifs et
- des moyens (AS-R) pour le regroupement, individuel par paquet de données Internet, des cellules ATM (Z') triées et pour la transmission par paquet de données Internet.

3. Système de communication ATM selon la revendication 1 ou 2, **caractérisé en ce que**
les moyens supplémentaires (RE-R, PE-R, EX-R, ZSP, ZK-U, RE, EF-R, SO-R, AS-R) pour la transmission de cellules ATM (Z') spécifiques au paquet de données Internet sont attribués en fonction d'une conception du système de communication ATM à des composants de systèmes individuels.

4. Système de communication ATM selon l'une quelconque des revendications 1 à 3, **caractérisé en ce que**
les moyens supplémentaires (RE-R, PE-R, EX-R, ZSP, ZK-U, RE, EF-R, SO-R, AS-R) pour la transmission de cellules ATM (Z') spécifiques au paquet de données Internet sont disposés entre des branchements de communication ATM (KA) du système de communication ATM et son réseau de transmission ATM (ASN).

5. Système de communication ATM selon l'une quelconque des revendications 1 à 4,
- avec des unités de ligne (LIC) réalisant des branchements de communication ATM (KA), qui
- sont reliés à au moins un multiplexeur ATM (AMX) pour le multiplexage de cellules ATM (Z, Z') transmises par les unités de ligne (LIC),
- avec au moins un multiplexeur de statistique ATM (SMU) relié côté entrée à des multiplexeurs ATM (AMX) pour le stockage temporaire et la répartition statistique des cellules ATM (Z, Z'),
- avec un réseau de transmission ATM (ASN) relié à l'au moins un multiplexeur de statistique ATM (SMU),
**caractérisé en ce que**
- les moyens supplémentaires (RE-R, PE-R, EX-R, ZSP, ZK-U, RE, EF-R, SO-R, AS-R) sont prévus pour la transmission de cellules ATM (Z') spécifiques au paquet de données Internet entre les multiplexeurs ATM (AMX) et les multiplexeurs de statistique ATM (SMU).

6. Système de communication ATM selon l'une quelconque des revendications 1 à 4,
- avec des unités de ligne (LIC) réalisant des branchements de communication ATM (KA), qui
- sont reliés à au moins un multiplexeur ATM (AMX) pour le multiplexage de cellules ATM (Z, Z') transmises par les unités de ligne (LIC),
- avec au moins un multiplexeur de statistique ATM (SMU) relié côté entrée à des multiplexeurs ATM (AMX) pour le stockage temporaire et la répartition statistique des cellules ATM (Z, Z'),
- avec un réseau de transmission ATM (ASN) relié à l'au moins un multiplexeur de statistique ATM (SMU),
**caractérisé en ce que**
- les moyens supplémentaires (RE-R, PE-R, EX-R, ZSP, ZK-U, RE, EF-R, SO-R, AS-R) pour la transmission de cellules ATM (Z') spécifiques au paquet de données Internet sont intégrés dans le multiplexeur de statistique (SMU).

7. Système de communication ATM selon l'une quelconque des revendications 1 à 3,
- avec des unités de ligne (LIC) réalisant des branchements de communication ATM (KA), qui
- sont reliés à au moins un multiplexeur ATM (AMX) pour le multiplexage de cellules ATM (Z, Z') transmises par les unités de ligne (LIC),
- avec au moins un multiplexeur de statistique ATM (SMU) relié côté entrée à des multiplexeurs ATM (AMX) pour le stockage temporaire et la répartition statistique des cellules ATM (Z, Z'),
- avec un réseau de transmission ATM (ASN) relié à l'au moins un multiplexeur de statistique ATM (SMU),
**caractérisé en ce que**
- les moyens supplémentaires (RE-R, PE-R, EX-R, ZSP, ZK-U, RE, EF-R, SO-R, AS-R) pour la transmission de cellules ATM (Z') spécifiques au paquet de données Internet sont attribués au réseau de transmission ATM (ASN).

8. Système de communication ATM selon l'une quelconque des revendications 1 à 3,
- avec des unités de ligne (LIC) réalisant des branchements de communication ATM (KA), qui
- sont reliés à au moins un multiplexeur ATM (AMX) pour le multiplexage de cellules ATM (Z, Z') transmises par les unités de ligne (LIC),
- avec au moins un multiplexeur de statistique ATM (SMU) relié côté entrée à des multiplexeurs ATM (AMX) pour le stockage temporaire et la répartition statistique des cellules ATM (Z, Z'),
- avec un réseau de transmission ATM (ASN) relié à l'au moins un multiplexeur de statistique ATM (SMU),
**caractérisé en ce que**
pour la transmission de cellules ATM (Z') spécifiques au paquet de données Internet, il est prévu
- entre les multiplexeurs ATM (AMX) et les multiplexeurs de statistique ATM (SMU),
- - des moyens (ZE-R) pour la sélection de cellules ATM (Z') spécifiques au paquet de données Internet à partir du flux de cellules ATM (Z, Z'),
- - des moyens (PE-R) pour la recherche d'en-têtes de paquet de données Internet (IH) à partir des cellules ATM (Z') sélectionnées,
- - des moyens (EX-R) pour l'extraction de l'information d'adresse de destination (DA) contenue dans des en-têtes de paquet de données Internet (IH) et pour la transmission à des moyens pour la déduction d'une information de routage (RI),
- - des moyens (ZK-U, ZSP, EF-R) pour l'insertion de l'information de routage (RI) déduite, reçue du moyen (RE) pour la déduction d'une information de routage (RI) dans chaque cellule ATM (Z') d'un paquet de données Internet (IDP) et sa transmission au réseau ATM (ASN),
- - des moyens (SO-R) pour le tri des cellules ATM (Z') transmises aux paquets de données Internet (IDP) respectifs et
- - des moyens (AS-R) pour le regroupement, individuel par paquet de données Internet, des cellules ATM (Z') triées et la transmission par interpaquet de données
- et, attribués au réseau de transmission ATM (ASN)
- des moyens (RE) pour la déduction d'une information de routage (RI) reçue du moyen pour l'extraction d'une information d'adresse de destination (DA) à partir de l'information d'adresse de destination (DA) et sa transmission au moyen (ZK-U, ZSP, EF-R) pour l'insertion de l'information de routage (RI) dans chaque cellule ATM (Z').

9. Système de communication ATM selon l'une quelconque des revendications 1 à 3,
- avec des unités de ligne (LIC) réalisant des branchements de communication ATM (KA), qui
- sont reliés à au moins un multiplexeur ATM (AMX) pour le multiplexage de cellules ATM (Z, Z') transmises par les unités de ligne (LIC),
- avec au moins un multiplexeur de statistique ATM (SMU) relié côté entrée à des multiplexeurs ATM (AMX) pour le stockage intermédiaire et la distribution statistique des cellules ATM (Z, Z'),
- avec un réseau de transmission ATM (ASN) relié à l'au moins un multiplexeur de statistique ATM (SMU),
**caractérisé en ce que**
pour la transmission de cellules ATM (Z') spécifiques au paquet de données Internet, il est prévu
- - intégrés dans les multiplexeurs de statistique ATM (SMU),
- - des moyens (ZE-R), pour la sélection de cellules ATM (Z') spécifiques au paquet de données Internet à partir du flux de cellules ATM (Z, Z'),
- - des moyens (PE-R) pour la recherche d'en-têtes de paquet de données Internet (IH) à partir des cellules ATM (Z') sélectionnées,
- - des moyens (EX-R) pour l'extraction de l'information d'adresse de destination (DA) contenue dans des en-têtes de paquet de données Internet (IH) et la transmission à des moyens (RE) pour la déduction d'une information de routage (RI),
- - des moyens (ZK-U, ZSP, EF-R) pour l'insertion de l'information de routage (RI) déduite, reçue du moyen (RE) pour la déduction d'une information de routage (RI), dans chaque cellule ATM (Z') d'un paquet de données Internet (IDP) et sa transmission au réseau ATM (ASN),
- - des moyens (SO-R) pour le tri des cellules ATM (Z') transmises aux paquets de données Internet (IDP) respectifs et
- - des moyens (AS-R) pour le regroupement, individuel par paquet de données Internet, des cellules ATM (Z') triées et la transmission par interpaquet de données et, attribués au réseau de transmission ATM (ASN),
- des moyens (RE), pour la déduction d'une information de routage (RI) reçue du moyen (EX-R) pour l'extraction d'une information d'adresse de destination (DA) à partir de l'information d'adresse de destination (DA) et sa transmission au moyen (ZK-U, ZSP, EF-R) pour l'insertion de l'information de routage (RI) dans chaque cellule ATM (Z').

10. Système de communication ATM selon l'une quelconque des revendications précédentes, **caractérisé en ce que**
il est prévu des moyens (SPV) pour l'identification (PK) univoque de cellules ATM (Z') d'un paquet de données Internet (IDP) à transmettre et des moyens (SO-R) pour le tri des cellules ATM (Z') transmises aux paquets de données Internet (IDP) respectifs en fonction de l'identification (PK) univoque.

11. Système de communication ATM selon l'une quelconque des revendications 1 à 10, **caractérisé en ce que**
il est prévu des moyens pour la transmission de cellules ATM (Z') respectivement d'un paquet de données Internet (IDP) sur une sortie du réseau de transmission ATM (ASN).

12. Système de communication ATM selon l'une quelconque des revendications précédentes, **caractérisé en ce que**
les moyens supplémentaires pour la transmission de cellules ATM (Z') spécifiques au paquet de données Internet peuvent être réalisés pour différents protocoles Internet (IP) avec une transmission d'information orientée paquet.

13. Système de communication ATM selon l'une quelconque des revendications précédentes, **caractérisé en ce que**
lors d'une transmission de cellules ATM (Z') spécifiques Internet avec une information de chemin virtuelle (VPI) prédéfinie et/ou une information de canal virtuelle (VCI),
il est prévu des moyens pour la sélection de cellules ATM (Z') spécifiques au paquet de données Internet en fonction de l'information de chemin virtuelle (VPI) prédéfinie et/ou de l'information de canal virtuelle (VCI).

14. Système de communication ATM selon l'une quelconque des revendications précédentes, **caractérisé en ce que**
lors d'une transmission de cellules ATM (Z') spécifiques au paquet de données Internet avec une information de routage (KRI) prédéfinie, déduite de l'information de chemin virtuelle (VPI) et/ou de l'information de canal virtuelle (VCI) et interne au système de communication et avec une identification de liaison (CI), il est prévu des moyens pour la sélection de cellules ATM (Z') spécifiques au paquet de données Internet en fonction de l'information de routage (KRI) prédéfinie et interne au système de communication et d'une identification de liaison (CI);

15. Système de communication ATM selon l'une quelconque des revendications précédentes,
**caractérisé en ce que**
les moyens (EX-R) pour l'extraction de l'information d'adresse de destination (DA) contenue dans les en-têtes de paquet de données Internet (IH) comprennent
- des moyens (EX-R) pour la recherche de l'information d'adresse de destination (DA) insérée dans les en-têtes de paquet de données Internet (IH) et
- des moyens (EX-R) pour la transmission de l'information d'adresse de destination (DA) aux moyens (RE) pour la déduction d'une information de routage (RI) à partir de l'information d'adresse de destination (DA).

16. Système de communication ATM selon l'une quelconque des revendications précédentes, **caractérisé en ce que**
les moyens (EX-R) sont conçus pour l'extraction de l'information d'adresse de destination (DA) contenue dans des en-têtes de paquet de données Internet (IH) pour différents en-têtes de paquet de données Internet (IH).

17. Système de communication ATM selon l'une quelconque des revendications précédentes, **caractérisé en ce que**
les moyens (RE) pour la détermination de l'information de routage (RI) comprennent
- un tableau de routage (RT) et
- une routine de recherche cherchant le tableau de routage (RT).

18. Système de communication ATM selon l'une quelconque des revendications précédentes, **caractérisé en ce que**
les informations de routage (RI) sont représentées par l'information de routage (RI) reproduisant Internet sur le réseau de communication ATM et spécifique au réseau de communication ATM, et que l'information de routage (RI) est représentée par une information de chemin virtuelle (VPI) et/ou une information de canal virtuelle (VCI) ou par une information de routage interne au système de communication (KRI) conjointement avec une identification de liaison (CI), l'information de routage interne au système de communication (KRI) étant convertie conjointement avec une identification de liaison (CI) avant une transmission au réseau de communication ATM en une information de chemin virtuelle (VPI) et/ou une information de canal virtuelle (VCI).

19. Système de communication ATM selon l'une quelconque des revendications précédentes, **caractérisé en ce que**,
dans le cas de cellules ATM (Z') spécifiques au paquet de données Internet avec une information d'adresse de destination multicast Internet (MDA) dans l'en-tête de paquet de données Internet (IH)
- il est prévu des moyens pour le tri d'autres informations de routage (RI) à une information d'adresse de destination multicast Internet (MDA) dans le tableau de routage (RT), et
- des moyens pour la copie des cellules ATM (Z') respectives et l'insertion respectivement d'une autre information de routage (RI).

20. Système de communication ATM selon l'une quelconque des revendications précédentes, **caractérisé en ce que**,
lors de la transmission de cellules ATM (Z') spécifiques au paquet de données Internet, il est prévu une mémoire intermédiaire de cellules ATM (ZSP) pour un stockage provisoire des cellules ATM (Z') pendant le traitement technique de transmission et pour un acheminement ultérieur, conforme au flux de cellules ATM, des cellules ATM (Z') sélectionnées.

21. Système de communication ATM selon l'une quelconque des revendications précédentes, **caractérisé en ce que**
des moyens sont conçus pour la formation et le traitement de cellules ATM selon le ATM-Adaption Layer AAL 5 standardisé, une information de fin de paquet indiquant la fin d'un paquet de données (DP) ou d'un paquet de données Internet (IPD) étant contenue dans ces cellules ATM (Z).
